# EUROPÄISCHE PATENTANMELDUNG

(11) **EP 2 025 441 A1**
(43) Veröffentlichungstag der Anmeldung: **18.02.2009**
(21) Anmeldenummer: 08155523.7
(22) Anmeldetag: 30.04.2008
(51) Int. Cl.: B23K 1/00, B23K 1/008, B23K 1/20, F02F 3/00

(54) **Verfahren zum Lötverbinden eines ersten Metallteils mit einem zweiten Metallteil und Verwendung einer mechanischen Verbindung; entsprechend hergestelltes gelötetes Metallbauteil**

(30) Priorität: 31.07.2007 DE 102007035849
(71) Anmelder: Gesenkschmiede Schneider GmbH, 73431 Aalen (DE)
(72) Erfinder: Kolbe, Peter, 73434 Aalen (DE); Schmitz, Ernst-Peter, 73453 Abtsgmünd (DE)
(74) Vertreter: Neidl-Stippler, Cornelia

(57) **Zusammenfassung**

Die Erfindung betrifft ein Verfahren zum Lötverbinden eines ersten Metallteils (1) mit einem zweiten Metallteil (2) zu einem gelöteten Metallbauteil, wobei eine zu verlötende Verbindungsfläche (3) des ersten Metallteils (1) mit einer zu verlötenden Verbindungsfläche (3') des zweiten Metallteils (2) zueinander ausgerichtet angeordnet werden, sodaß sie eine Berührungsfläche ausbilden und Lotmaterial im Bereich der Verbindungsfläche angeordnet ist; das erste und zweite Metallteil (1,2) unter Ausbilden einer mechanischen Verbindung gegeneinander gedrückt werden; die so verbundenen Metallteile in einen Ofen bei Löttemperatur überführt und dort bis zum Erhalt einer Lötverbindung zwischen den Metallteilen unter Ausbildung eines gelöteten Metallbauteils belassen werden; sowie ein danach hergestelltes gelötetes Metallbauteil, bei dem die Verbindungsfläche (3) des ersten verlöteten Metallteils (1) und die Verbindungsfläche (3') des zweiten verlöteten Metallteil (2) zur mechanischen Verbindung mit dem jeweils anderen Metallteil (2,1) entsprechend geformt ist, mit diesem in mechanischer Verbindung steht und im Bereich der aufeinander- liegenden Verbindungsflächen verlötet ist.

## Beschreibung

Die Erfindung bezieht sich auf ein Verfahren zum Lötverbinden eines ersten Metallteils mit einem zweiten Metallteil sowie auf ein gelötetes Metallbauteil, das nach dem erfindungsgemäßen Verfahren hergestellt ist.

Nachfolgend wird die Erfindung anhand von gebauten Kolben für Verbrennungsmotoren näher erläutert, die Lehre ist aber keineswegs auf diese Anwendung beschränkt sondern eignet sich allgemein für zu verbindende Metallteile.

Es ist bekannt, zwei Metallteile, insbesondere einen Kolbenring mit einem Kolbenboden durch Löten miteinander zu verbinden. Insbesondere ist es bekannt, wie beispielsweise in der WO 2006/034862 A1 beschrieben, bei einem Kühlkanalkolben einen Kolbenboden mit einem Kolbenschaft durch Schweissen zu verbinden.

Bei bestimmten Anwendungen ist es jedoch von Nachteil, wenn die durch Schweissen oder Reibschweissen ausgebildete Schweißwulst unerwünscht groß auftritt.

Es ist auch nachteilig, dass die Schweissverbindung üblicherweise nachgearbeitet werden muss, um überstehendes Material zu entfernen.

Es ist Aufgabe der Erfindung, ein Verfahren zur vereinfachten Verbindung von zwei Metallteilen zu schaffen. Erfindungsgemäß wird die Aufgabe durch ein Verfahren nach Anspruch 1 gelöst.

Vorteilhafte Weiterbildungen ergeben sich aus den abhängigen Ansprüchen.

Dadurch, dass die beiden zu verbindenden Metallteile vor dem Verlöten mechanisch an ihrer Berührungsfläche verbunden und danach hartgelötet werden, kann die Ausbildung eines Schweisswulstes vermieden werden, wodurch aufwendiges Nacharbeiten entfällt und bei Einsatz von vorvergüteten einzelnen Metallteilen auch eine Nachvergütung des fertig gelöteten Metallbauteils vermieden werden kann.

Beim Löten wird eine nicht lösbare, stoffschlüssige Verbindung hergestellt (s. DIN 8585 "Löten"). Als Verbindungsmaterial dient meist eine bei tieferen Temperturen als die zu verbindenden Metallteile schmelzende Metallegierung. Mit Hilfe des Metalls wird eine metallische Verbindung der metallischen Teile erzeugt. Typisch ist dabei die intermetallische Verbindung. In dieser dünnen Schicht bilden die Werkstoffe der zu verbindenden Teile sowie das Lot eine Legierung und gehen dadurch eine feste Verbindung ein. Dabei wird als Weichlöten ein solches bei Temperaturen bis ca 450°C bezeichnet, ab 450°C findet dann Hartlöten statt und bei über 900°C (meist unter Vakuum oder Schutzgas) bezeichnet man es als Hochtemperaturlöten.

Als Material zum Erzeugen einer Lötverbindung werden Lote verwendet. Metallote sind meist Legierungen, die als Lötdraht, Pulver oder Lötpaste vorliegen. Sie enthalten oft bereits ein Flußmittel. Nach dem Löten, das durch lokale Erwärmung (Lötlampe oder Lötkolben) oder aber Erwärmung des gesamten Teils (Löten im Ofen) erfolgen kann, verbleibt oft ein Flußmittelrückstand auf der Lötstelle. Lotverbindungen mit hohen Reinheitsanforderungen müssen ohne Flussmittel erfolgen, erfordern daher reine Fügepartneroberflächen und sollten bevorzugt in Vakuum oder unter Schutzgas durchgeführt werden, da während der Erwämung der Lötstelle der Sauerstoffanteil der Luft eine Oberflächenoxidation bewirkt, die eine erfolgreiche Legierungsbildung an der Lötstelle hindert. Der Zweck von Flußmitteln ist, die zu verlötenden Oberflächen zu reduzieren und die erneute Bildung von Oxiden während des Lötens zu vermeiden, welche die Fließ- und Benetzungseigenschaften stark reduzieren würden und um Einschlüsse von Fremdmaterialien zu verringern. Ein weiterer Effekt von Flußmitteln ist die Herabsetzung der Oberflächenspannung des flüssigen Lots. Es kann sinnvoll sein, Flußmittel nach dem Löten zu entfernen, da sie korrosiv wirken können.

Zum erfolgreichen Verbinden kann bspw. ein Schmiedehub eine mechanische Verbindung, wie eine Klinkverbindung zwischen den beiden zu verbindenden Metallteilen schliessen oder aber eine andere geeignete, dem Fachmann geläufige einfache, ausreichend feste mechanische Verbindungstechnik eingesetzt werden, welche dazu führt, dass die zu verbindenden Metallteile bis zum Abschluss des Lötvorgangs in ihrer Position fixiert sind und den während dieser Verfahrensschritte auftretenden Kräften widerstehen.

Ferner ist günstig, dass beim Löten in einem einzigen Arbeitsschritt bereits vergütete Einzelteile verarbeitet werden können, was Nachbearbeitung durch Wärmebehandlung vermeidet.

Die Erfindung beinhaltet also Verfahren zum Lötverbinden eines ersten Metallteils mit einem zweiten Metallteil zu einem gelöteten Metallbauteil, wobei eine zu verlötende Verbindungsfläche des ersten Metallteils mit einer zu verlötenden Verbindungsfläche des zweiten Metallteils zueinander ausgerichtet angeordnet werden, so daß sie eine Berührungsfläche ausbilden und Lotmaterial im Bereich der Verbindungsfläche angeordnet ist; wobei das erste und zweite Metallteil unter Ausbilden einer mechanischen Verbindung gegeneinander gedrückt werden; die so verbundenen Metallteile in einen Ofen bei Löttemperatur überführt und dort bis zum Erhalt einer Lötverbindung zwischen den Metallteilen unter Ausbildung eines gelöteten Metallbauteils belassen werden.

Dabei ist es günstig, wenn die zu verlötenden Verbindungsflächen des ersten und zweiten Metallteils so ausgebildet sind, daß sie bei mechanischem Stoß gegeneinander eine mechanische Verriegelung, wie eine Klickverbindung, eine Rastverbindung bilden - also eine Passung haben. Typische mechanische Verbindungstechniken sind bspw. ein Schmieden in einer Form oder aber ein Gegeneinanderpressen der beiden Teile, um eine mechanische Verbindung zu erhalten.

Es hat sich als vorteilhaft herausgestellt, dass eine Lotaufnahmevertiefung in mindestens einer Verbindungsfläche vorgesehen ist, in die Lotmaterial vor Gegeneinanderdrücken der zu verbindenden Metallteile eingebracht wird. Das Lotmaterial kann bspw. in Form eines Lotdrahtes eingeführt werden, es kann aber auch pulverförmig oder in Form einer Lötpaste aufgebracht werden, wobei nicht unbedingt eine Lotaufnahmevertiefung notwendig ist.

Für viele Anwendungen, die erhöhte Temperaturresistenz des Metallbauteils erfordern, kann es sinnvoll sein, daß das Löten Hartlöten und das Lotmaterial ein Hartlot ist.

Typisch für Kraftfahrzeugkolben aus Stahl sind dabei Lotmaterialien, die unter der Bezeichnung Hartlote im Handel erhältlich sind. Für Stahlkolben sind geeignete Hartlot-Materialien dem Fachmann bekannt.

Eine Anwendung des erfindungsgemäßen Verfahrens ist das Verbinden von Bestandteilen eines zweiteiligen Kolbens für Verbrennungsmotoren.

Ferner bezieht sich die Erfindung auch auf ein gelötetes Metallbauteil, hergestellt nach einem erfindungsgemäßen Verfahren, wobei die Verbindungsfläche am ersten zu verlötenden Metallteil und die Verbindungsfläche am zweiten zu verlötenden Metallteil zur mechanischen Verbindung mit dem jeweils anderen Metallteil entsprechend geformt ist und in Eingriff steht, wobei im Bereich der aufeinanderliegenden Verbindungsflächen eine Lötverbindung ausgebildet ist.

Dabei kann in mindestens einer Verbindungsfläche eine Lotmaterialvertiefung ausgebildet sein, in welche das Lotmaterial eingebracht wird, damit es sich nicht während des mechanischen Verbindens verschiebt .

Es kann günstig sein, dass das erste und oder das zweite Metallteil vor dem Löten vergütet ist - bspw. wärmebehandelt. So ist es möglich, dass die Metallteile ohne Nachvergüten nach dem Löten zusammengefügt werden und es kann das aufwendige Verguten des fertigen Metallbauteils entfallen.

Bei einer Ausführungsform der Erfindung ist der Werkstoff des ersten und zweiten Metallteils identisch.

Es kann aber auch sinnvoll sein, daß der Werkstoff des ersten und zweiten Metallteils verschieden ist.

Typische Werkstoffe für Kolben sind Vergütungsstähle, AFP-Stähle, Hochtemperaturstähle, Ventilstähle. Eine Definition und Erläuterung dieser Stahlsorten findet sich in Stahlschlüssel 2007, Verlag Stahlschlüssel Wegst, auf das vollinhaltlich bezug genommen wird.

Bei Kolben für Verbrennungsmotoren sind Hartlote für Temperaturen von um 600°C - von 550 - ca 650 °C sinnvoll, wenn die Kolbenbetriebstemperatur bei etwa 450 - 500 °C liegt. Es kann auch direkt beim Hartlöten Wärmevergütet werden - in diesem Falle sind Temperaturen von etwa 850 - 890°C bei Stahl empfehlenswert sowie entsprechende Lotmaterialien.

Bei einer bevorzugten Ausführungsform der Erfindung ist das erste zu verbindende Metallteil ein Kolbenboden und das zweite zu verbindende Metallteil ein Kolbenring.

Um bei bestimmten Anforderungen die Qualität eines gebauten Metallbauteils, insbesondere eines Kolbens zu verbessern und gleichzeitig sehr wirtschaftliches gelötetes Metallbauteil herzustellen, kann es von Vorteil sein, wenn der Werkstoff des ersten und des zweiten Metallteils in der Legierung verschieden ist. Es kann beispielsweise das erste Metallteil eine feste bzw. auch eine hoch feste Legierung wie Hochtemperaturstahl (Definition für hochfeste Legierung: s. "Stahlschlüssel" 2007, Verlag Stahlschlüssel Wegst 2007) und für das zweite Metallteil ein minderwertiger/weicherer oder preiswerter Werkstoff eingesetzt werden. Es versteht sich, dass sich die Werkstofflegierungen sowohl auf Stahl oder Aluminiumlegierungen beziehen oder eine Kombination aus Stahl und Aluminiumlegierung.

Bevorzugt ist bei einem gelöteten Metallteil, das nach einem oben beschriebenen Verfahren hergestellt ist, das erste zu verbindende Metallteil ein Kolbenboden und das zweite zu verbindende Metallteil ein Kolbenring.

Es versteht sich, dass die vorstehend genannten und nachstehend noch zu erläuternden Merkmale nicht an der jeweils angegebenen Kombination, sondern auch in anderen Kombinationen verwendbar sind.

Die Erfindung wird im Folgenden beispielhaft anhand eines gelöteten Kolbens für einen Verbrennungsmotor als Ausführungsbeispiel unter Bezugnahme auf die dazugehörige Zeichnung näher erläutert, auf die sie keineswegs eingeschränkt ist. Es zeigen:
Fig. 1 einen Ausschnitt eines Querschnittes durch die zueinander zum Verbinden angeordneten Teile eines gelöteten Kolbens.
Fig. 2 ein Detail des Querschnitts der Fig.1, mit einer Lötmaterialvertiefung mit Lotdraht;
Fig. 3 einen gelöteten Kolben, hergestellt aus den in Fig. 1 und 2 gezeigten Teilen; und
Fig. 4 schematisch eine Abfolge von Verfahrensschritten zur Herstellung eines gelöteten Kolbens.

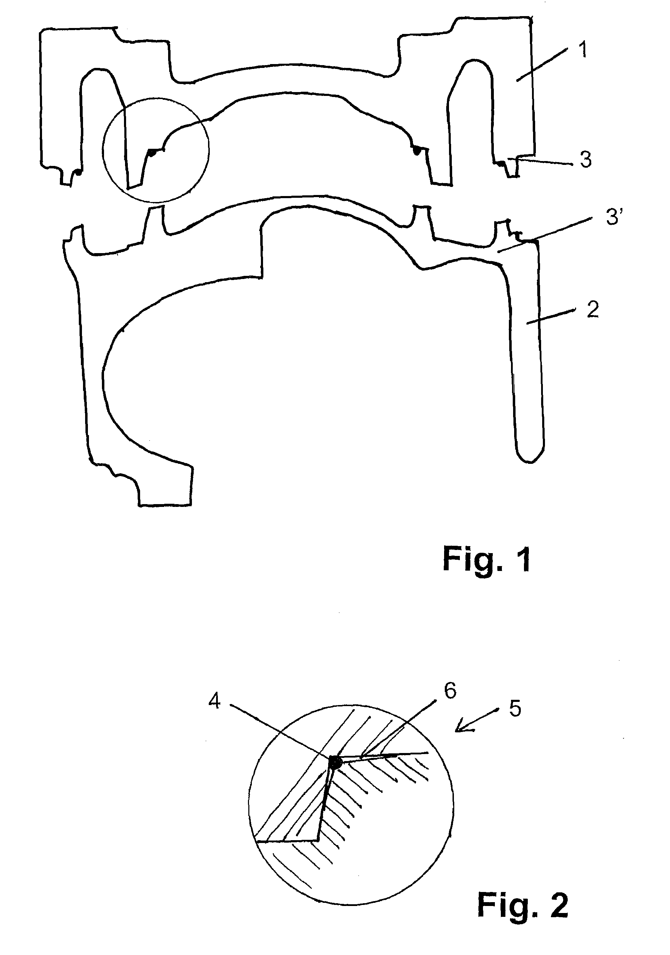

Die Fig. 1 zeigt einen Ausschnitt eines Querschnitts durch ein erstes Metallteils 1 in einem noch nicht mechanisch verbundenen und gelöteten Zustand mit einem zweiten, nicht dargestellten Metallteil 2. Das erste Metallteil 1 weist in dieser Ausführungsform als spezielle Ausgestaltung der Verbindungsfläche 3 eine umlaufende Lotvertiefung, in der hier ein Lotdraht angeordnet ist, auf. Diese Verbindungsfläche 3 wird beim mechanischen Anbinden an das nicht gezeigte zweite Metallteil 2 durch mechanisches Pressen - hier Schmieden im Gesenk - auf eine Verbindungsfläche 3' des zweiten Metallteils 2 mechanisch angebunden (s. Fig. 4). Die mechanisch verbundenen oder verklinkten Berührungsflächen 3, 3' des ersten und zweiten Metallteils 1, 2 können dann durch das Lötmaterial zwischen den Metallteilen durch Löten stärker verbunden werden. Dazu wird das so mechanisch fixierte Metallbauteil in einen Lötofen verbracht, in dem es bis zum Abschluss des Lötvorgangs verbleibt.

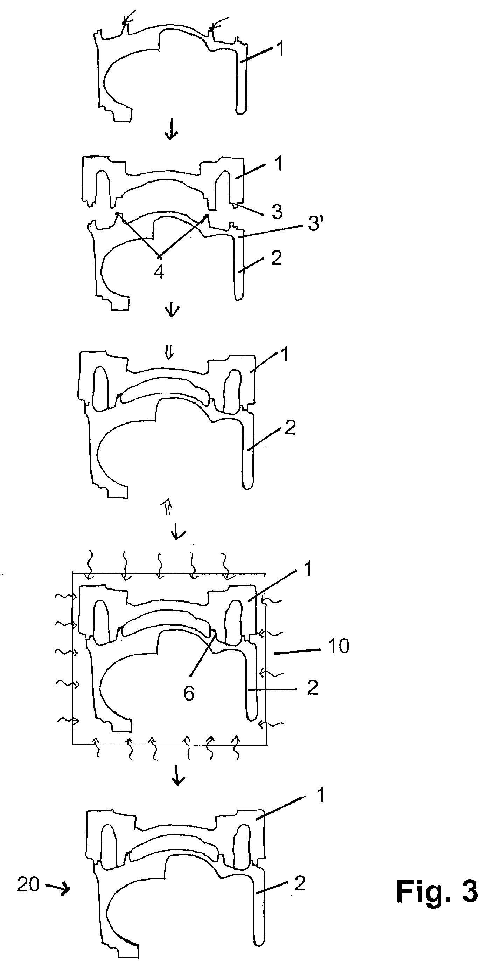

Die Fig. 2 zeigt ein Details des Metallbauteils 1, aus dem eine mögliche Anordnung der Lotmaterialvertiefung im Randbereich der Verbindungsflächen ersichtlich ist. Beim Aufheizen wird das flüssige Lot über den Kapillareffekt dann in dünne Spalte 6 zwischen den beiden zu verbindenden Metallteilen gezogen. Das erste Metallteil 1 ist ein sogenannter Kolbenboden und das zweite Metallteil 2 wird als Kolbenring bzw. Kolbenschaft bezeichnet. Die Fig. 3 zeigt den gelöteten Kolben 20 aus der Anordnung der Fig. 1 und 2 nach dem Zusammenfügen des ersten und zweiten Metallteils 1, 2 nach dem Lötverbinden. Die Fig. 3 zeigt, dass im Bereich der aufeinanderliegenden Verbindungsflächen eine Lötverbindung 6 am Kolben 20 ausgebildet ist.

Die Fig. 4 zeigt schematisch eine Abfolge der Verfahrensschritte zur Herstellung eines Metallbauteils aus zwei Metallteilen.

Zunächst wird in Schritt 1 Lötmaterial auf die Verbindungsfläche 3 des ersten Metallbauteils 1 aufgebracht. Dann wird in Schritt 2 das erste und zweite Metallbauteil zueinander ausgerichtet und durch Aufeinanderdrücken in Schritt 3 miteinander mechanisch verbunden

In Schritt 4 wird dieser mechanische Verbund in einen Ofen 10 überführt, wo der Verbund bei Löttemperatur bis zum Erhalt einer guten Lötstelle wärmebehandelt wird und der fertig gelötete Kolben 20 bei Schritt 5 entnommen wird.

Der Werkstoff, aus dem das erste Metallteil 1 hergestellt ist, kann aufgrund der Anforderungen ein sehr hochfestes bzw. widerstandsfähiges Material beispielsweise Stahl oder Aluminiumlegierung sein (bspw. Nickel-Stähle, AFP-Stähle und andere lötfähige Werkstoffe). Hingegen kann das zweite Metallteil 2 aus einem weicheren Werkstoff oder minderwertigeren Werkstoff auch beispielsweise aus Stahl oder Aluminium hergestellt sein kann. Im übrigen wird auf die zeichnerischen Darstellungen der Erfindungen als wesentlich verwiesen.

## Patentansprüche

1. Verfahren zum Lötverbinden eines ersten Metallteils (1) mit einem zweiten Metallteil (2) zu einem gelöteten Metallbauteil, wobei eine zu verlötende Verbindungsfläche (3) des ersten Metallteils (1) mit einer zu verlötenden Verbindungsfläche (4) des zweiten Metallteils (2) zueinander ausgerichtet angeordnet werden, so daß sie eine Berührungsfläche ausbilden und Lotmaterial im Bereich der Verbindungsfläche angeordnet ist; **dadurch gekennzeichnet, daß**
- das erste und zweite Metallteil (1, 2) unter Ausbilden einer mechanischen Verbindung gegeneinander gedrückt werden;
- die so verbundenen Metallteile in einen Ofen bei Löttemperatur überführt und dort bis zum Erhalt einer Lötverbindung zwischen den Metallteilen unter Ausbildung eines gelöteten Metallbauteils belassen werden.

2. Verfahren nach Anspruch 1, **dadurch gekennzeichnet, daß** die zu verlötenden Verbindungsflächen (3) des ersten und zweiten Metallteils (1, 2) so ausgebildet sind, daß sie beim mechanischem Stoß gegeneinander eine mechanische formschlüssige Verbindung; eine Verriegelung, wie eine Klickverbindung, eine Rastverbindung bilden.

3. Verfahren nach einem der vorangehenden Ansprüche, **dadurch gekennzeichnet, dass** eine Lotaufnahmevertiefung in mindestens einer Verbindungsfläche (3, 4) vorgesehen ist, in die Lotmaterial vor Gegeneinanderdrücken der zu verbindenden Metallteile eingebracht wird.

4. Verfahren nach einem der vorangehenden Ansprüche, **dadurch gekennzeichnet, daß** das Löten Hartlöten und das Lotmaterial ein Hartlot ist.

5. Verfahren nach einem der vorangehenden Ansprüche, **dadurch gekennzeichnet, daß** die Metallteile Bestandteile eines zweiteiligen Kolbens für Verbrennungsmotoren, Verdichter für Gasmotoren, für Pumpen und Hubkolbenanlagen sind.

6. Gelötetes Metallbauteil, hergestellt nach einem Verfahren nach einem oder mehreren der vorherigen Ansprüche, **dadurch gekennzeichnet, daß** die Verbindungsfläche (3) des ersten verlöteten Metallteils (1) und die Verbindungsfläche (3') des zweiten verlöteten Metallteil (2) zur mechanischen Verbindung mit dem jeweils anderen Metallteil (2, 1) entsprechend geformt ist und mit diesem in mechanischer Verbindung steht und im Bereich der aufeinanderliegenden Verbindungsflächen verlötet ist.

7. Gelötetes Metallbauteil nach Anspruch 6, **dadurch gekennzeichnet, daß** eine Lötmaterialvertiefung in oder benachbart mindestens einer der Verbindungsflächen (3, 3') vorliegt.

8. Gelötetes Metallbauteil nach Anspruch 6 oder 7, **dadurch gekennzeichnet, dass** das erste und oder das zweite Metallteil vor dem Löten vergütet ist.

9. Gelötetes Metallbauteil nach einem der Ansprüche 6 bis 8, **dadurch gekennzeichnet, daß** die verbundenen Metallteile (1, 2) vor dem Löten vergütet und an zumindest einer Seite durch Lötverbinden ohne Nachvergüten nach dem Löten verbunden sind. zusammengefügt sind

10. Gelötetes Metallbauteil nach einem oder mehreren der vorhergehenden Ansprüche 6 bis 9, **dadurch gekennzeichnet, daß** der Werkstoff des ersten und zweiten Metallteils (1, 2) identisch ist.

11. Gelötetes Metallbauteil nach einem oder mehren der Ansprüche 6 bis 10, **dadurch gekennzeichnet, daß** der Werkstoff des ersten und zweiten Metallteils (1, 2) verschieden ist.

12. Gelötetes Metallbauteil nach einem oder mehreren der Ansprüche 6 bis 11, **dadurch gekennzeichnet, daß** das erste zu verbindende Metallteil (1) ein Kolbenboden und das zweite zu verbindende Metallteil (2) ein Kolbenring ist.

13. Gelötetes Metallbauteil nach einem oder mehreren der Ansprüche 6 - 12, **dadurch gekennzeichnet, dass** die Lötstelle eine Hartlötstelle ist.
